# EUROPEAN PATENT APPLICATION

(11) **EP 1 357 524 A1**
(43) Date of publication of application: **29.10.2003**
(21) Application number: 01993914.9
(22) Date of filing: 01.06.2001
(51) Int. Cl.: G07F 7/02

(54) **COMMODITY TRANSACTING DEVICE, MOBILE COMMUNICATION DEVICE, ADMINISTRATION DEVICE, AND COMMODITY TRANSACTING SYSTEM**

(30) Priority: 31.10.2000 JP 2000333620
(71) Applicant: Yozan Inc., Tokyo 155-0031 (JP)
(72) Inventor: KIYOMATSU, Hisanori, c/o YOZAN INC., Tokyo 155-0031 (JP)
(74) Representative: Grünecker, Kinkeldey, Stockmair & Schwanhäusser Anwaltssozietät
(86) International application number: JP0104664
(87) International publication number: WO02039396

(57) **Abstract**

The present invention relates to a commodity transaction apparatus, a mobile communication apparatus, a management apparatus and a commodity transaction system for selling commodities (for example, articles, and services) by bank transfer and so on, using a mobile communication apparatus such as a portable telephone. An automatic vending machine 10 transmits buying amount of articles, a bank account number, access information to a portable telephone 20. The portable telephone 20 transmits user identification information, and the information supplied from the automatic vending machine 10 to an authentication and settlement apparatus 30. The authentication and settlement apparatus 30 transmits the buying amount, and the bank account number to the automatic vending machine 10. The automatic vending machine 10 provides the articles after verification of the buying amount and the bank account number to transmit selling completion information to the authentication and settlement apparatus 30. The authentication and settlement apparatus 30 debits the charges from the user account to the transfer account. Thereby, the reliability of the payment of the charges may be improved by collation of the transfer amount and the bank account number with the charges and the bank account number included in the charge payment information, which is transmitted from the commodity transaction apparatus to the mobile communication apparatus.

## Description

### Field of the Invention

The present invention relates to a commodity transaction apparatus, a mobile communication apparatus, a management apparatus and a commodity transaction system for selling commodities (for example, articles and services) by bank transfer and so on, using a mobile communication apparatus such as a portable telephone.

### Background of the Invention

Japanese Patent Laying-open No. 8-87655 has disclosed an information processing system for processing information to provide a user with commodities, and to pay the charges thereof through wireless communication among three parties, which consist of an automatic vending machine for providing commodities such as articles and services, a portable telephone carried by the user, and a financial institution with which the user has business relations.

According to the above information processing system, a user makes a buy request to the automatic vending machine and selects commodities, using the portable telephone into which an IC card is inserted, when the user buys commodities from the automatic vending machine. The automatic vending machine then transmits charge information of the commodities (the trade names, the charges, and the bank account number) to the portable telephone. After the user approves the payment of the commodities (that is, buying of the commodities), the portable telephone stores transaction information derived from the charge information on the IC card as unsettled information, in return for the delivery of the selected commodities from the automatic vending machine.

In the meantime, the portable telephone reads the stored unsettled information from the IC card and transmits it to the specified user's financial institution for transaction. In the user's financial institution for transaction a predetermined settlement processing is executed, and transaction completion information is transmitted to the portable telephone through telephone networks or radio base stations, after the processing is completed. The portable telephone is configured to change the corresponding unsettled information stored on the IC card to the transaction completion information, on receipt of the transaction completion information.

In the above information processing system, first, the delivery of commodities is made through the communication between the portable telephone as a mobile communication terminal apparatus and the automatic vending machine as a commodity transaction apparatus. Thereafter, the charge payment processing of the commodities is executed through communication between the portable telephone of the user and the management apparatus of the financial institution.

Therefore, at the automatic vending machine as a commodity transaction apparatus side, it delivers commodities regardless of whether the transaction information has been notified to the management apparatus of the financial institution, only if commodity transaction information including the charges, the bank account number and so on, is transmitted to the portable telephone as a mobile communication terminal apparatus.

Moreover, at the automatic vending machine, that is, at the user side, he/she can not check before completion of the settlement, whether the transaction information including the charges, the bank account number and so on transmitted to the portable telephone is notified to the financial institution without fail.

Accordingly, in the event of the occurrence of an accident that the amount of charges or the bank account number, which are received by the management apparatus of the financial institution, do not coincide with those which are transmitted from the automatic vending machine as a commodity transaction apparatus to the mobile communication terminal apparatus due to any causes, the accident could be found only after the settlements.

Consequently, there have been problems that the occurrence of such an accident leads to claiming of unreasonable charges, or transfer of the charges to wrong account number, leading not only to inability in an accurate charge transfer processing but also to difficulty in correction thereof.

### Disclosure of the Invention

The present invention has been made to solve the above problems, and an object thereof is to provide a commodity transaction apparatus, a mobile communication apparatus, a management apparatus and a commodity transaction system, which are able to make the delivery of commodities and the charge payment processing thereof in corresponding with each other.

In addition, another object of the present invention is to provide a commodity transaction apparatus, a mobile communication apparatus, a management apparatus and a commodity transaction system, offering the improved reliability of the payment for the commodities by checking the amount of payment received by the control means of transacting financial institution and payee with those included in payment information transmitted from commodity transaction apparatus to the mobile communication terminal apparatus.

To achieve the above objects, the present invention provides a commodity transaction apparatus comprising a first data communication unit for performing data communication with a mobile communication terminal apparatus carried by a user, and a second data communication unit for performing data communication with a management apparatus for authentication of the user and settlement processing of charges, wherein the first data communication unit transmits request information, including charge information of commodities which are to be bought by the user, payee information and access information to the second data communication unit, to the mobile communication terminal apparatus, and the second data communication unit receives payment information of payment of the charges to the payee from the management apparatus.

In this context, the word "payment" means a broad concept including the payment through bank account, or the like. The payment information means a broad concept including information on the announcement of bank transfer and the allowance of delivering commodities.

Further, the present invention provides a mobile communication terminal apparatus comprising a third data communication unit for performing data communication with a commodity transaction apparatus for providing commodities, and payment request means for transmitting request information, which is received from the commodity transaction apparatus, including charge information of commodities, payee information, and access information to the commodity transaction apparatus, and stored user identification information, to a management apparatus.

Moreover, the present invention provides a management apparatus comprising payment request receiving means for receiving request information, including charge information of commodities, payee information, and access information to the commodity transaction apparatus for providing commodities, and user identification information, from a mobile communication apparatus carried by the user, user authentication means for authenticating the user based on the identification information, and settlement means for transmitting payment information of payment of the charges to the payee based on the access information to the commodity transaction apparatus corresponding to the authentication of user by the user authentication means.

In addition, the settlement means transmits delivery approval information of the commodities as payment information.

Besides, the commodity transaction apparatus comprises a selling control unit for giving instructions to deliver the commodities, when the second data communication unit receives delivery proposal information as payment information, and further the selling control unit comprises a mechanism to deliver the commodities, or a mechanism to notify delivery approval information of the commodities.

Furthermore, the settlement means transmits charge information on the commodities and on the payee as payment information.

Additionally, the present invention provides a commodity transaction apparatus comprising a selling control unit for comparing the charge information and the payee information between the payment information and the request information transmitted through the first data communication unit, when the second data communication unit receives the charge information of the commodities and the payee information as payment information, wherein the second data communication unit transmits instruction information of settlement related with the payment information to the management apparatus, when it proved to coincide with each other as a consequence of the comparison.

The commodity transaction system according to the present invention having a commodity transaction apparatus, one or more mobile communication terminal apparatus and a management apparatus,
said commodity transaction apparatus comprising,
a first data communication unit for performing data communication with a mobile communication terminal apparatus carried by a user, and
a second data communication unit for performing data communication with a management apparatus for authentication of said user and settlement processing of charges,
wherein said first data communication unit transmits request information, including charge information of commodities which are to be bought by said user, payee information, and access information to said second data communication unit, to said mobile communication terminal apparatus, and
said second data communication unit receives payment information of payment of said charges to said payee from said management apparatus,
said mobile communication terminal apparatus comprising,
a third data communication unit for performing data communication with a commodity transaction apparatus for providing commodities, and
payment request means for transmitting request information, which is received from said commodity transaction apparatus, including charge information of commodities, payee information, and access information to said commodity transaction apparatus, and stored user identification information, to a management apparatus,
said management apparatus comprising,
payment request receiving means for receiving request information, including charge information of commodities, payee information, and access information to a commodity transaction apparatus for providing commodities, and user identification information, from a mobile communication apparatus carried by said user,
user authentication means for authenticating said user based on said identification information, and
settlement means for transmitting payment information of payment of said charges to said payee based on said access information to said commodity transaction apparatus corresponding to the authentication of said user d by said user authentication means.

This specification includes part or all of the contents as disclosed in the specification and/or drawings of Japanese Patent Application No. 333620/2000, which is a priority documents of the present invention.

### Brief Description of Drawings

FIG. 1 shows a block diagram of an automatic vending machine (a commodity transaction apparatus), a portable telephone (a mobile communication terminal apparatus), and an authentication and settlement apparatus (a management apparatus), according to an embodiment of the present invention.
FIG. 2 shows main information flows among the automatic vending machine (a commodity transaction apparatus), the portable telephone (a mobile communication terminal apparatus), and the authentication and settlement apparatus (a management apparatus).

### Best Modes to Carry Out the Invention

Hereinafter, preferred embodiment of the present invention will be described in detail, referring to attached drawings.

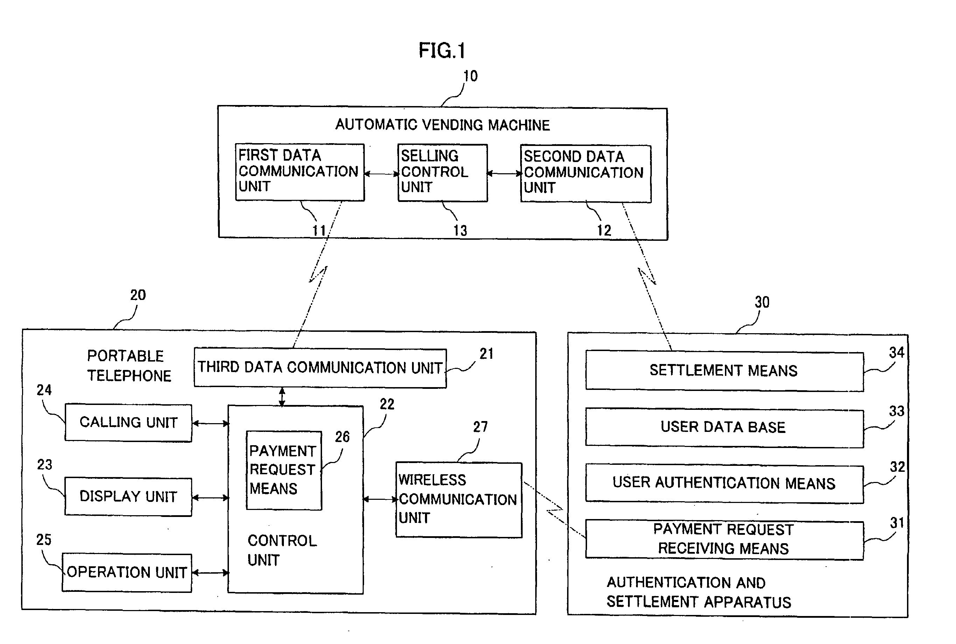

FIG. 1 shows a block diagram of a selling system comprising an automatic vending machine (a commodity transaction apparatus ), a portable telephone (a mobile communication terminal apparatus), and an authentication and settlement apparatus (a management apparatus), according to the present invention.

A portable telephone is used as a mobile communication terminal apparatus in the present embodiment.

It should be noted that the mobile communication terminal apparatus is not necessarily limited to the portable telephone, but a personal use electronic information apparatus (for example, a notebook-type personal computer, a PDA (Personal Digital Assistants: portable information terminal), and an electronic notebook) equipped with a communication function may be used for the terminal apparatus.

The payment through bank account or the like will be described as an example hereinafter, but the payment in the present invention is not limited to such an example.

An automatic vending machine 10 as a commodity transaction apparatus in the present embodiment comprises a first data communication unit 11, a second data communication unit 12, a selling control unit 13, commodity selection buttons (not shown), and a commodity delivering mechanism (not shown).

The first data communication unit 11 performs data communication directly with a portable telephone 20, not by using current base stations or telephone lines, but by using a short-range wireless communication technology (for example, Bluetooth) which adopts radio waves.

Also, it should be noted that the short-range wireless communication technology applied to data communication between the first data communication unit 11 and the portable telephone 20 is not necessarily limited to the Bluetooth, but an infrared communication system such as IrDA (Infrared Data Association) may be used for it.

Moreover, the first data communication unit 11 may have a function as a key station (a base phone) for the portable telephone 20. With the above configuration taken, when trying to perform data communication between the portable telephone 20 and other apparatus other than the automatic vending machine 10, the portable telephone 20 can perform data communication with other apparatus through the first data communication unit 11 as a key station by connecting with the first data communication unit 11 with the above-mentioned short-range wireless communication technology, without direct line connection from the portable telephone 20 to a wireless base station.

Now, the first data communication unit 11 supplies user detected information to the selling control unit 13, when it detects the portable telephone 20 existing within a communicable range (for example, a range of tens of centimeters - about one meter from the automatic vending machine 10), while the portable telephone 20 is set in a predetermined mode (for example, a transaction mode). The selling control unit 13 transmits information on, for example, the name of the automatic vending machine 10, and dealers, through the first data communication unit 11 in response to the user detected information.

A third data communication unit 21 embedded in the portable telephone 20 supplies the received information to a control unit 22 on receipt of the information sent from the automatic vending machine 10. By the control unit 22, the received information is displayed on a display unit 23.

This enables the information on, for example, the name of the automatic vending machine 10, and the dealers and so on to be displayed on the display unit 23 of the portable telephone 20. Therefore, a bearer of the portable telephone 20 can check to see if everything is ready for buying of commodities from the automatic vending machine 10, using the portable telephone 20 through data communication with the automatic vending machine 10.

That is, when the bearer of the portable telephone 20 buys commodities from the automatic vending machine 10, the bearer sets the portable telephone 20 to the predetermined mode, brings the portable telephone 20 within a communicable range from the automatic vending machine 10, and manipulates commodity selecting buttons (not shown) on the automatic vending machine 10, with the information, for example, on the name of the automatic vending machine 10 and the dealers being displayed on the display unit 23.

Alternatively, selection of the commodities may be made on the portable telephone 20 as follows. Initially, the automatic vending machine 10 transmits menu information, operation guide information, and so on for selection of the commodities to the portable telephone 20. The bearer of the portable telephone 20 inputs commodity codes and so on for selection of commodities on an operation unit 25, to move the cursor onto the menu of the desired commodities to determine the operation, referring to a menu screen displayed on the display unit 23 of the portable telephone 20. Then, it transmits information to specify commodities therefrom to the automatic vending machine 10.

When the selling control unit 13 recognizes selection of the commodities, it transmits request information, which includes charge (price) information of the commodities specified by the selecting operation, payee information such as a bank account number, and access information to the automatic vending machine 10 including ID information on the automatic vending machine 10 (automatic vending machine ID information), to the portable telephone 20, through the first data communication unit 11. Here, the selling control unit 13 may be configured to transmit the specified trade name as well to the portable telephone 20, through the first data communication unit 11.

The control unit 22 of the portable telephone 20 temporarily stores the request information (the charges, the bank account number, the access information to the automatic vending machine 10, and the trade names if the names are received), which is transmitted from the automatic vending machine 10 and received by the third data communication unit 21, in a storage unit consisting of semiconductor memories (not shown) and so on, and the control unit 22 displays the charges (the trade names and the charges, if the names are received.) on the display unit 23 as well. Here, the control unit 22 may be configured to display, not only the charges, but also the bank account number, and the access information to the automatic vending machine, on the display unit 23.

This allows the bearer of the portable telephone 20 (the user of the automatic vending machine) to check the charges of the specified commodities by looking at the display unit 22. Here, the portable telephone 20 may be provided with a sound synthesizer so as to notify the charges through synthesized sounds through communication unit 24.

The bearer of the portable telephone 20 (the user of the automatic vending machine) executes an operation for a settlement request, that is, a payment request using the operation unit 25 of the portable telephone 20, after verification of the charges of the specified commodities. The operation for the payment request is executed by manipulating, for example, a calling key mounted on the operation unit 25.

On completion of operation for the payment request, settlement request means (payment request means) 26 embedded in the control unit 22 automatically dials the previously registered telephone number of the authentication and settlement apparatus 30.

When an address (URL) on the Internet for the authentication and settlement apparatus 30 is registered in the payment request means 26, the payment request means 26 connects to the Internet and accesses the address of the authentication and settlement apparatus 30.

The payment request means 26 transmits previously registered identification information of the bearer of the portable telephone 20 (the user ID information), the charges, the bank account number, and the access information to the automatic vending machine 10, which are supplied from the automatic vending machine 10 to the authentication and settlement apparatus 30 through the wireless communication unit 27 after the authentication and settlement apparatus 30 responds. The identification information (the user ID information) is devoted to identification of the user of the automatic vending machine 10.

Here, the telephone number of the portable telephone, or the bank account number of the user may be used as identification information (the user ID information).

Also, when the first data communication unit 11 of the automatic vending machine 10 has a function for the key station (the base phone) of the portable telephone 20 as described above, the connection to the authentication and settlement apparatus 30 may be made through the first data communication unit 11 embedded in the automatic vending machine 10 as a key station, using the third data communication unit 21, without direct transmission from the wireless communication unit 27 embedded in the portable telephone 20.

When the bearer of the portable telephone 20 (the user of the automatic vending machine) wishes to cancel the buying of commodities after they are selected, cancel operation of the buying is executed by the operation unit 25 of the portable telephone 20. The cancel operation is executed by manipulating specific keys mounted on the operation unit 25. Once cancellation is occurred, the control unit 22 causes the third data communication unit 21 to transmit the cancel information. The automatic vending machine 10 deletes the information on the previously selected commodities, on receipt of the cancel information.

The authentication and settlement apparatus 30 comprises settlement request receiving means (payment request receiving means) 31, user authentication means 32, a user database 33, and settlement means 34. Here, the present embodiment will be described, under assumption that the above authentication and settlement apparatus 30 is provided in a settlement institution which is different from a bank in which the user has his/her deposit account.

The payment request receiving means 31 automatically responds to a call from the portable telephone 20, and receives the identification information (the user ID information), the charges, the bank account number, and the access information to the automatic vending machine 10, which are transmitted from the portable telephone 20.

The user database 33 records the identification information (the user ID information), the password, the user's bank or credit account number and the buying record for each user. The buying record contains at least the settlement dates and times, the buying amount, and bank account number. The password, which is previously registered by users, is stored in the user database 33 after encryption. Here, not only combinations of figures, but also arbitrary character strings may be used as a password.

The user authentication means 32 gets the user's bank account number and so on from the user database 33, based on the user identification information (the user ID information) received by the payment request receiving means 31. The user authentication means 32 accesses the financial institution (not shown) to check the balance of the user's bank account. Here, the access to the other financial agencies and so on is not required for verification of the balance of the account, when the authentication and settlement apparatus 30 is provided in the bank and so on, where the user has his/her bank account.

Then, when the above check has revealed that the balance of the user's deposit account is short for the amount of the commodity charges, information on the short of balance is transmitted to the portable telephone 20 through the payment request receiving means 31 in the user authentication means 32. The control unit 22 of the portable telephone 20, when the information of short of balance is received, displays the received information on the display unit 23, and, at the same time, transmits the cancel information to the automatic vending machine 10 through the third data communication unit 21. This causes buying of the commodities from the automatic vending machine 10 to be canceled.

Conversely, when the above check has revealed that the balance of the user's deposit account is enough, the user authentication means 32 checks whether the current buying amount (the charge) exceeds the predetermined limit amount for one transaction. Moreover, the user authentication means 32 retrieves the buying record recorded in the user database 33 to check whether the cumulative buying amount including the current buying amount for a predetermined period exceeds a predetermined allowable cumulative amount. Furthermore, the user authentication means 32 also checks whether the transfer account related with the current payment request is new or not.

The user authentication means 32 supplies a message to prompt the portable telephone 20 to input the password through the payment request receiving means 31, when the transfer account related with the current payment is new. The user authentication means 32 also supplies a message to prompt the portable telephone 20 to input the password through the payment request receiving means 31, when the amount related with the current payment request exceeds the predetermined amount (for example, ¥1000). Moreover, the user authentication means 32 also supplies a message to prompt the portable telephone 20 to input the password through the payment request receiving means 31, when the cumulative buying amount including the current buying amount during a predetermined period exceeds the predetermined allowable cumulative amount (when the cumulative buying amount, for example, for one day exceeds ¥10,000).

On receipt of the message to prompt to input the password transmitted from the authentication and settlement apparatus 30, the wireless communication unit 27 of the portable telephone 20 supplies the received message to the control unit 22. The control unit 22 displays the message to prompt to input the password on the display unit 23.

Then, the user inputs the password on the operation unit 25 after verification of the above message on the display unit 23. The control unit 22 transmits the input password to the authentication and settlement apparatus 30 through the wireless communication unit 27.

The payment request receiving means 31 of the authentication and settlement apparatus 30 receives the password transmitted from the portable telephone 20 and supplies it to the user authentication means 32. The user authentication means 32 gets the registered password of the user from the user database 33, based on the previously received user authentication information (the user ID information) for collation with the password transmitted from the portable telephone 20.

When both of the passwords coincide with each other as a result of the above collation, the user authentication means 32 judges that the payment request is made by an authenticated user, and requests the settlement means 34 to execute the settlement processing.

On the other hand, the payment request receiving means 31 of the authentication and settlement apparatus 30, for example, disconnects the portable telephone 20 for canceling the transaction by the above portable telephone 20, and stores it in a buying record of the user database 33 as an abnormal buying transaction, when the password input with the portable telephone 20 does not reach the payment request receiving means 31, even if predetermined time has elapsed after transmission of the message to prompt to input the password, or when there is no coincidence between both passwords even after the above collation by the user authentication means 32 is repeated predetermined times and so on. Moreover, when it proved from the buying record that there have been consecutively repeated abnormal buyings for a predetermined number of times, the transactions with the above portable telephone 20 are configured not to be accepted subsequent requests.

This prevents improper use by others except for the users registered in the user database 33 or by injustice traders.

Here, the user authentication means 32 requests the settlement means 34 to execute the settlement processing without prompting to input the password, when the bank account number has been previously used by the user for transferring, the current buying amount is less than a predetermined amount, and, at the same time, the cumulative buying amount including the current buying amount for a predetermined period is less than the allowable cumulative amount.

This achieves improvement in the convenience by elimination of input of the password, and less risk of leakage of the password, for example, caused by peeking at the password by other people, when the user buys a comparatively small amount of commodities with the automatic vending machine which has been previously used by the user.

Then, the settlement means 34 accesses the automatic vending machine 10, based on the access information to the automatic vending machine 10. Specifically, when the telephone number is supplied as the access information to the automatic vending machine 10, the automatic vending machine 10 is called by automatic dialing of the telephone number. Alternatively, when the address (URL) on the Internet is supplied as the access information to the automatic vending machine 10, the access to the above address is performed.

The settlement means 34 transmits a previous transfer notice including a transfer amount and the bank account number when the second data communication unit 12 of the automatic vending machine 10 responds to the above calling.

The second data communication unit 12 of the automatic vending machine 10 receives the previous transfer notice to supply the contents of the received previous transfer notice to the selling control unit 13. The selling control unit 13 delivers (provides) the commodities specified by the user, and, at the same time, transmits selling completion information (approval for the transfer) of the delivery of the specified commodities to the above authentication and settlement apparatus 30 through the second data communication unit 12, when the bank account number related with the previous transfer notice coincides with the previously set one (the bank account number transmitted to the portable telephone 20) for the above automatic vending machine 10, or when the transfer amount coincides with the charge (the charge transmitted to the portable telephone 20) of the commodities specified by the user.

The settlement means 34 requests the financial institution (not shown) to transfer the charges from the user account to the transfer account, when the selling completion information is supplied from the automatic vending machine 10. Thereby, the charges are debited from the user's account, and transferred to the transfer account. Moreover, the settlement means 34 notifies the completion of the settlement to the payment request receiving means 31. Thereby, the payment request receiving means 31 adds the current buying record (the buying date and time, amount, and bank account number) to the user database 33 for registration.

Therefore, the user may check that the settlement procedures have been normally completed by delivering (providing) the selected commodities from the automatic vending machine 10. Moreover, the above verification may be done by notification to the user with an indicator (not shown) equipped in the automatic vending machine 10 itself, and the message for the notification may be transmitted to the third data communication unit 21 of the portable telephone 20, through the first data communication unit 11 and for display on the display unit 23 of the portable telephone 20.

On the other hand, the selling control unit 13 of the automatic vending machine 10 does not deliver the commodities, but transmits a message, telling that the contents of the previous transfer notice are not correct, to the settlement means 34 through the second data communication unit 12, when the bank account number supplied from the authentication and settlement apparatus 30 does not coincide with the previously set one (the bank account number transmitted to the portable telephone 20) for the above automatic vending machine 10, or when the transfer amount supplied from the authentication and settlement apparatus 30 does not coincide with the charges (the charges transmitted to the portable telephone 20) of the commodities specified by the user. The selling control unit 13 transmits a message for suspension of the selling to the settlement means 34 through the second data communication unit 12, when the commodities specified by the user may not be normally delivered (provided), even if the contents of the previous transfer notice is proper.

The suspension of the selling is notified to the payment request receiving means 31 by the settlement means 34, when it receives the message for suspension of the selling. In this case, the payment request receiving means 31 does not add the current buying record (buying date and time, amount, and bank account number) in the user database 33 for registration, does not request the financial institution (not shown) to transfer the charges from the account of the user to the transfer account, and cancels the current transaction with the above portable telephone 20.

Therefore, the user may check that the settlement procedures have been cancelled by the fact that the selected commodities do not delivered (provided) from the automatic vending machine 10. Moreover, the automatic vending machine 10 itself may notify a message, telling that the settlement procedures have been canceled, to the user using an predetermined display unit (not shown). Furthermore, a message telling that the settlement procedures have been canceled, is transmitted to the third data communication unit 21 of the portable telephone 20 with the first data communication unit 11 and for display of the above message on the display unit 23 of the portable telephone 20.

Although there is illustrated in the present embodiment a configuration for short-range wireless communication between the first data communication unit 11 and the third data communication unit 21, the first data communication unit 11 for data communication with the portable telephone 20 is embedded in the automatic vending machine 10, and the third data communication unit 21 for data communication with the automatic vending machine 10 is embedded in the portable telephone 20. Further, the automatic vending machine 10 may use the second data communication unit 12 in place of the first data communication unit 11, and the portable telephone 20 may use the wireless communication unit 27 in place of the third data communication unit 21, without provision of the first data communication unit 11 and the third data communication unit 21. In this case, the telephone number of the automatic vending machine 10 (or, the address on the Internet) is displayed on the automatic vending machine 10, and the user uses the portable telephone 20 for access to the telephone number of the machine 10 (or the user performs the Internet access to the address of the automatic vending machine 10, using the portable telephone 20).

The automatic vending machine 10 automatically responds to the call (access) from the portable telephone 20 to transmit the name of the automatic vending machine and the dealers, and a menu for selection of commodities. Then, the automatic vending machine 10 transmits the charges of the selected commodities, the bank account number, and the access information to the automatic vending machine 10 to the portable telephone 20 on selection of commodities by the user. The portable telephone 20 displays the charges of the commodities on the display unit 23. The portable telephone 20 disconnects the communication with the automatic vending machine 10, and then connects to the authentication and settlement apparatus 30, when the user makes a request operation for settlement. The portable telephone 20 transmits the user identification information (the user ID information), the charges of the commodities, the bank account number, and the access information to the automatic vending machine 10 to the authentication and settlement apparatus 30, when it responds. The operations of the authentication and settlement apparatus 30 are already described above. Thereby, buying of commodities may be performed with the automatic vending machine and without using cash, by calling the automatic vending machine 10 from the portable telephone 20, even if the telephone does not have the third data communication unit 21.

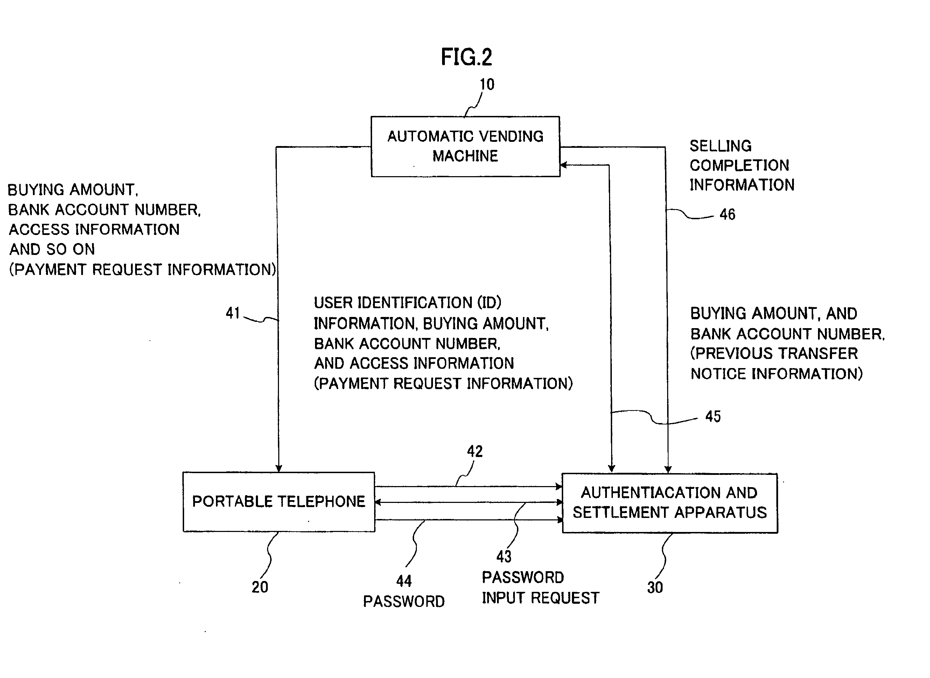

FIG. 2 shows flows of main information among the automatic vending machine (commodity transaction apparatus), the portable telephone (mobile communication terminal apparatus), and the authentication and settlement apparatus (control apparatus).

When the user of the automatic vending machine 10 (the bearer of the portable telephone 20) specifies the commodities and so on, the automatic vending machine 10 transmits the payment request information 41 including the buying amount, the bank account number, the access information (for example, telephone number) to the automatic vending machine, and, if required, the trade name to the portable telephone 20.

In the portable telephone 20, the buying amount and, if required, the trade name is displayed on the display unit 23. When the user of the automatic vending machine 10 (the bearer of the portable telephone 20) executes a verification operation for the buying with the operation unit 25 of the portable telephone 20, the portable telephone 20 transmits the payment request information 42 to the authentication and settlement apparatus 30. The above payment request information 42 includes the identification information (the user ID information) for identification of the user (the bearer of the portable telephone 20) of the automatic vending machine 10, the buying amount, the bank account number, and the access information to the automatic vending machine.

The authentication and settlement apparatus 30 transmits a password input request 43 to the portable telephone 20, when the buying amount is large, or the bank transfer account is newly opened. The authentication and settlement apparatus 30 checks whether the received password coincides with the previously registered password, or not, after receiving the input password 44 by the user (the bearer of the portable telephone 20) of the automatic vending machine 10.

The authentication and settlement apparatus 30 transmits the previous transfer notice information 45 to the automatic vending machine 10 as the payment information, when the user authentication by the password is eliminated on account of the small buying amount, or when the user authentication is performed by the password. The previous transfer notice information 45 includes the buying amount, and the bank account number.

The automatic vending machine 10 checks the buying amount and the bank account number, and transmits the selling completion information 46 to the authentication and settlement apparatus 30, after delivering (providing) the commodities specified by the user (the bearer of the portable telephone 20) of the automatic vending machine 10. The authentication and settlement apparatus 30 executes the settlement processing to debit the charges from the user's bank account and to transfer them to the bank transfer account, on receipt of the selling completion information 46.

Accordingly, in the automatic vending machine system according to the present embodiment, the user selects the commodities to be bought, the charges, the bank account number, and the access information to the automatic vending machine 10 supplied from the automatic vending machine 10 are transmitted in package from the portable telephone 20 to the authentication and settlement apparatus 30, and the commodities are delivered from the automatic vending machine 10, after the authentication and the settlement is completed by the authentication and settlement apparatus 30, as described above. Therefore, there may be the following advantages.

Firstly, the safety and reliability of the transaction may be improved, as the commodities are delivered, after the automatic vending machine 10 checks whether the transaction information including the charges, the bank account number, and so on transmitted to the portable telephone 20 are notified without fail to the related financial institution.

Transaction by an unauthorized person, and credit trading, which requires a large amount of money exceeding the balance of the user deposit, may be prevented, as the user authentication is performed by the authentication and settlement apparatus 30, based on the buying amount or the buying record of the user, before the commodities are delivered from the automatic vending machine, or before the automatic vending machine becomes in a ready state to deliver the commodities.

Moreover, reduction of the cases to input the password, a decrease in risk for leakage of the password, and the faster dealing may be realized, as the authentication and settlement apparatus 30 can dispense with the user authentication by the password, based on the buying amount and the buying record of the user.

In addition, in the embodiment shown in FIG. 1, the data connection between the portable telephone 20 and the authentication and settlement apparatus 30 through the wireless communication unit 27 can be limited to the period from completion of the commodity selection to completion of the user authentication by the authentication and settlement apparatus 30, that is, to the completion of transmission of the identification information of the bearer of the portable telephone 20 (the user ID information) from the portable telephone 20, and the charges, the bank account number, and the access information to the automatic vending machine 10, which are supplied from the automatic vending machine 10 to the authentication and settlement apparatus 30. This enables automatic disconnection between the portable telephone 20 and the authentication and settlement apparatus 30 through the wireless communication unit 27 from the authentication and the settlement apparatus 30 after collation by the user authentication means 32 of the authentication and settlement apparatus 30, and the calling time from the portable telephone 20 may be reduced as much as possible.

In the above embodiment, an automatic vending machine comprising a commodity delivering mechanism has been illustrated as a commodity transaction apparatus, but the commodity transaction apparatus provided with no commodity delivering mechanism, which is configured to deliver commodities, for example, by hand, may be used as a commodity transaction apparatus. In this case, for permission to deliver the commodities, an annunciator may be used to notify a user whether it is possible to deliver the commodities. Furthermore, the commodities for the commodity transaction apparatus is not limited to articles, that is, the commodity transaction apparatus may include an apparatus to provide information such as music software and game software, the one such as ATM (automatic teller machine) to provide cash, and the one for information processing service such as machine translation. The payment may be performed by credit card, besides using bank account.

All the cited references, patents and patent specifications are incorporated by reference in this specification of the present patent application.

### Industrial Applicability

As described above, according to the commodity transaction apparatus, the mobile communication apparatus, the management apparatus and the commodity transaction system of the present invention, the commodity transaction apparatus transmits request information including charge information, payee information and access information to the mobile communication apparatus, which transmits request information and user identification information to the management apparatus, which authenticates the user and transmits payment information of payment of charge to payee to the commodity transaction apparatus. Therefore, by confirming the coincidence between the transmitted and the received charges and payees, accurate payment process can be performed in commodity transaction apparatus, and it is useful for selling commodities (articles, service or the like) by mobile communication terminal apparatus such as a portable telephone or the like.

## Claims

1. A commodity transaction apparatus comprising,
a first data communication unit for performing data communication with a mobile communication terminal apparatus carried by a user, and
a second data communication unit for performing data communication with a management apparatus for authentication of said user and settlement processing of charges,
wherein said first data communication unit transmits payment request information, including charge information of commodities which are to be bought by said user, payee information, and access information to said second data communication unit, to said mobile communication terminal apparatus, and
said second data communication unit receives payment information of payment of said charges to said payee from said management apparatus.

2. A mobile communication terminal apparatus comprising,
a third data communication unit for performing data communication with a commodity transaction apparatus for providing commodities, and
payment request means for transmitting request information, which is received from said commodity transaction apparatus, including charge information of commodities, payee information, and access information to said commodity transaction apparatus, and stored user identification information, to a management apparatus.

3. A management apparatus comprising,
payment request receiving means for receiving request information, including charge information of commodities, payee information, and access information to a commodity transaction apparatus for providing commodities, and user identification information, from a mobile communication apparatus carried by said user,
user authentication means for authenticating said user based on said identification information, and
settlement means for transmitting payment information of payment of said charges to said payee based on said access information to said commodity transaction apparatus corresponding to the authentication of said user by said user authentication means.

4. A management apparatus according to claim 3, wherein
said settlement means transmits delivery approval information of said commodities as payment information.

5. A commodity transaction apparatus according to claim 1, wherein said commodity transaction apparatus comprises a selling control unit for giving instructions to deliver said commodities, when said second data communication unit receives delivery approval information as payment information.

6. A commodity transaction apparatus according to claim 5, wherein said selling control unit comprises a mechanism to deliver said commodities.

7. A commodity transaction apparatus according to claim 5, wherein said selling control unit comprises a mechanism to inform delivery approval information of said commodities.

8. A management apparatus according to claim 3, wherein said settlement means transmits charge information of said commodities and payee information as payment information.

9. A commodity transaction apparatus according to claim 1 comprising a selling control unit for comparing said charge information and said payee information between said payment information and said request information transmitted through the first data communication unit, when said second data communication unit receives the charge information of said commodities and the payee information as payment information, wherein said second data communication unit transmits instruction information of settlement related with said payment information to said management apparatus, when it proved to coincide with each other as a consequence of said comparison.

10. A commodity transaction system having a commodity transaction apparatus, one or more mobile communication terminal apparatus and a management apparatus,
said commodity transaction apparatus comprising,
a first data communication unit for performing data communication with a mobile communication terminal apparatus carried by a user, and
a second data communication unit for performing data communication with a management apparatus for authentication of said user and settlement processing of charges,
wherein said first data communication unit transmits request information, including charge information of commodities which are to be bought by said user, payee information, and access information to said second data communication unit to said mobile communication terminal apparatus, and
said second data communication unit receives payment information of payment of said charges to said payee from said management apparatus,
said mobile communication terminal apparatus comprising:
a third data communication unit for performing data communication with a commodity transaction apparatus for providing commodities, and
payment request means for transmitting request information, which is received from said commodity transaction apparatus, including charge information of commodities, payee information, and access information to said commodity transaction apparatus, and stored user identification information, to a management apparatus,
said management apparatus comprising:
payment request receiving means for receiving request information, including charge information of commodities, payee information, and access information to a commodities transaction apparatus for providing commodities, and user identification information, from a mobile communication apparatus carried by said user,
user authentication means for authenticating said user based on said identification information, and
settlement means for transmitting payment information of payment of said charges to said payee based on said access information to said commodity transaction apparatus corresponding to the authentication of said user by said user authentication means.
